# EUROPÄISCHE PATENTSCHRIFT

(11) **EP 0 208 275 B1**
(45) Veröffentlichungstag und Bekanntmachung des Hinweises auf die Patenterteilung: **17.02.1993**
(21) Anmeldenummer: 86109134.6
(22) Anmeldetag: 04.07.1986
(51) Int. Cl.: G06F 7/50

(54) **Anordnung zur bitparallelen Addition von Binärzahlen**
Arrangement for the bitparallel addition of binary numbers
Dispositif d'addition parallèle par bit de nombres binaires

(30) Priorität: 11.07.1985 DE 3524797
(43) Veröffentlichungstag der Anmeldung: 14.01.1987
(73) Patentinhaber: SIEMENS AKTIENGESELLSCHAFT, 80333 München (DE)
(72) Erfinder: Noll, Tobias, Dipl.-Ing., D-7441 Neckartailfingen (DE); Ulbrich, Walter, Dr.-Ing., D-8039 Puchheim (DE)

(56) Entgegenhaltungen:
- H. KWANG: "Computer arithmetic", 1979, Seiten 98-103, John Wiley & Sons, New York, US
- IEEE TRANSACTIONS ON COMMUNICATIONS TECHNOLOGY, Band COM-18, Nr. 5, Oktober 1970, Seiten 625-632, New York, US; A. LENDER: "Decision-directed digital adaptive equalization technique for high-speed data transmission"
- SIEMENS FORSCHUNGS- UND ENTWICKLUNGSBERICHTE, Band 13, Nr. 5, 1984, Seiten 233-239, Würzburg, DE; W. ULBRICH et al.: "Design of customized VLSI MOS circuits for digital signal processing"

## Beschreibung

Die Erfindung bezieht sich auf eine Anordnung zur bitparallelen Addition von Binärzahlen im Zweierkomplement nach dem Oberbegriff des Patentanspruchs 1.

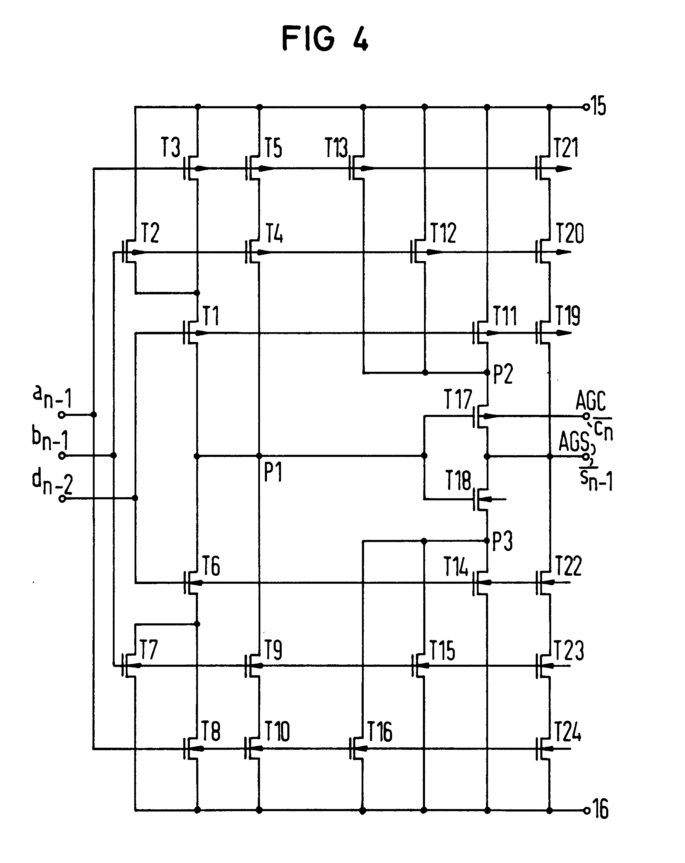

Eine Anordnung dieser Art ist aus dem Buch "Computer Arithmetic" von K.Hwang, Verlag John Wiley and Sons, New York, 1979, S. 98-103, insbesondere Fig. 4.2, bekannt. Hierbei weist jeder erste Addierer drei Eingänge auf, die jeweils mit gleichwertigen Bits dreier miteinander zu addierender Binärzahlen belegt sind. Die Summenausgänge der ersten Addierer sind an erste Eingänge der Addiereinrichtung geführt, die Übertragsausgänge der ersten Addierer (mit Ausnahme des höchstwertigen Addierers) an zweite Eingänge der Addiereinrichtung. An den Ausgängen der letzteren erscheint ein Summenwort als Ergebnis der Addition. Zum Unterschied von eine Addiereranordnung mit Übertragsdurchlauf ("Carry-Propagate"-Prinzip) werden hier die Überträge aller ersten Addierer bei einer Addition von drei Binärzahlen gleichzeitig gebildet und stehen als Übertragswort neben dem an den ersten Addierern abgegriffenen Zwischensummenwort für eine Addition in der Addiereinrichtung zur Verfügung. Eine in dieser Weise aufgebaute Addiereranordnung arbeitet nach dem sog. "Carry-Save"-Prinzip.

Bei einer "Carry-Save"-Anordnung zur Addition von Binärzahlen im Zweierkomplement kann wegen der getrennten Darstellung der von den ersten Addierern gelieferten Summe in Form eines Zwischensummenworts und eines Übertragsworts ein Überlaufeffekt auftreten, der zu einem falschen Additionsergebnis bzw. Summenwort führt. Ein solcher Fehler entsteht dann, wenn relativ kleine Summenworte aus größeren Zwischensummenworten und Übertragsworten mit entgegengesetzen Vorzeichen gebildet werden.

Der Erfindung liegt die Aufgabe zugrunde, eine Anordnung der eingangs genannten Art anzugeben, bei der der Überlaufeffekt nicht auftritt. Das wird erfindungsgemäß durch eine Ausbilding der Anordnung nach dem kennzeichnenden Teil des Patentanspruchs 1 erreicht. Der mit der Erfindung erzielbare Vorteil besteht insbesondere darin, daß Zwischensummen- und Übertragsworte, die einen solchen Überlaufeffekt und damit einen Additionsfehler hervorrufen würden, durch einfache Korrekturmaßnahmen lediglich im Bereich der beiden höchstwertigen ersten Addierer in eine Form gebracht werden, die das Auftreten von fehlerhaften Additionsergebnissen sicher vermeidet.

Die Ansprüche 2 bis 10 sind auf bevorzugte Ausgestaltungen und Weiterbildungen der Erfindung gerichtet.

Der Erfindung wird nachfolgend anhand von bevorzugten, in der Zeichnung dargestellten Ausführungsbeispielen näher erläutert. Dabei zeigt:
- Fig. 1: eine erfindungsgemäße Anordnung zur bitparallelen Addition dreier Binärzahlen,
- Fig. 2: eine erfindungsgemäße Anordnung zur bitparallelen Addition dreier Binärzahlen in einer rekursiven Schaltungsauslegung,
- Fig. 3: eine erfindungsgemäße Anordnung zur bitparallelen Addition von vier Binärzahlen in einer rekursiven Schaltungsauslegung,
- Fig. 4: eine Teilschaltung aus den Figuren 1 bis 3,
- Fig. 5: eine Funktionstabelle für eine andere Teilschaltung aus den Figuren 1 bis 3,
- Fig. 6: eine CMOS-Realisierung der durch die Funktionstabelle in Fig. 5 beschriebenen Teilschaltung,
- Fig. 7: ein Anwendungsbeispiel für die Anordnung nach Fig. 2,
- Fig. 8: ein Anwendungsbeispiel für die Anordnung nach Fig. 3 und
- Fig. 9: ein Schaltungsbeispiel für eine weitere Teilschaltung von Fig. 1.

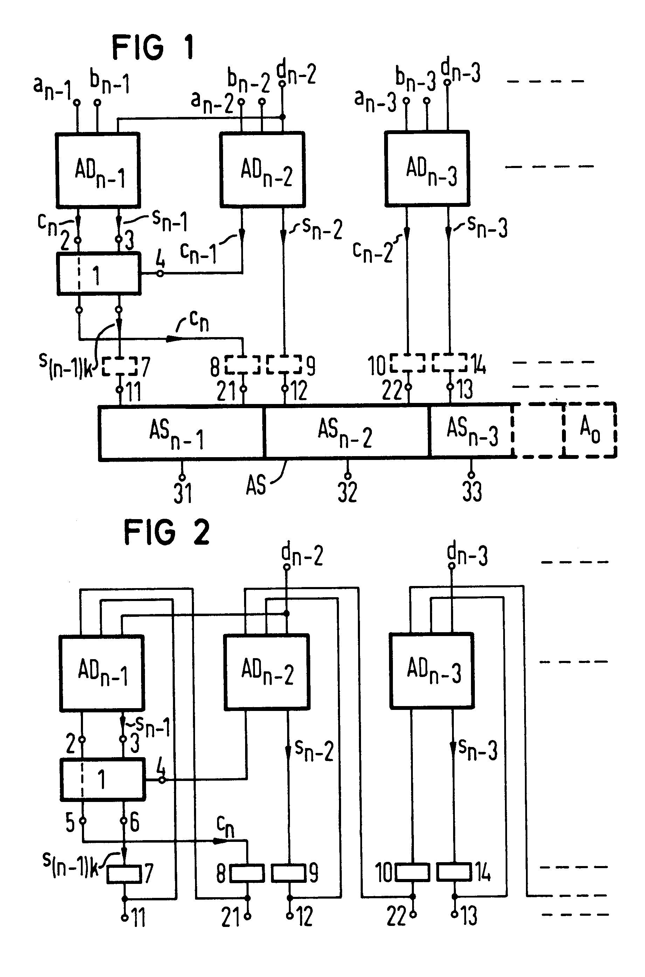

In Fig. 1 sind drei Addierer ADₙ₋₁, ADₙ₋₂ und ADₙ₋₃ dargestellt, die jeweils drei Eingänge aufweisen. Der erste Eingang von ADₙ₋₁ ist mit dem höchstwertigen Bit aₙ₋₁ einer n-stelligen, im Zweierkomplement dargestellten Binärzahl A belegt, der erste Eingang von ADₙ₋₂ mit aₙ₋₂ und der erste Eingang von ADₙ₋₃ mit aₙ₋₃. Die ersten Eingänge weiterer nicht dargestellter Addierer sind mit den weiteren Bits aₙ₋₄ bis a₀ belegt. In analoger Weise sind zweite Eingänge der einzelnen Addierer ADᵢ jeweils mit den einzelnen Bits bₙ₋₁, bₙ₋₂ ...einer im Zweierkomplement dargestellten Binärzahl B belegt, während dritte Eingänge dieser Addierer jeweils mit den einzelnen Bits dₙ₋₂, dₙ₋₃ ...einer dritten Binärzahl D beschaltet sind. Die Zahl D ist dabei als eine (n-1)-stellige Binärzahl aufzufassen, die durch eine Verdoppelung ihres Vorzeichenbits zu einer n-stelligen Zahl ergänzt ist, wobei die Vorzeichenbits jeweils den dritten Eingängen von ADₙ₋₁ und ADₙ₋₂ zugeführt werden.

Das durch die Addition von A, B und D entstehende Resultat wird entsprechend dem "Carry-Save"-Prinzip durch zwei getrennte Signale angegeben, und zwar durch ein an den Summenausgängen der Addierer ADᵢ bitweise abgreifbares Zwischensummenwort sₙ₋₁, sₙ₋₂, sₙ₋₃ ... s₀ und ein an den Übertragsausgängen von ADᵢ bitweise abgreifbares Übertragswort cₙ, cₙ₋₁, cₙ₋₂ ... c₁. Beide Worte werden nun in einer Addiereinrichtung AS mit einzelnen Addierern ASₙ₋₁, ASₙ₋₂ .... AS₀ zu dem das Resultat von A + B + D darstellenden Summenwort zusammengefaßt. Dazu werden erste Eingänge 11, 12, 13 usw. von AS in herkömmlicher Weise mit den einzelnen Bits sₙ₋₁, sₙ₋₂, sₙ₋₃ usw. des Zwischensummenwortes belegt, zweite Eingänge 21, 22 usw. in herkömmlicher Weise mit den Bits cₙ₋₁, cₙ₋₂ usw. des Übertragswortes. Das höchstwertige Bit cₙ des Übertragswortes wird dabei zunächst vernachlässigt. An den Ausgängen 31, 32, 33 usw. steht dann das Summenwort zur Verfügung.

Eine solche bisher übliche Eingangsbelegung von AS könnte in Fig. 1 durch (dort nicht gezeigte) unmittelbare Verbindungen des das Bit sₙ₋₁ abgebenden Ausgangs von ADₙ₋₁ mit dem Eingang 11 und des cₙ₋₁ abgebenden Übertragsausgangs von ADₙ₋₂ mit dem Eingang 21 und durch die eingezeichneten Belegungen von 12, 13 und 22 veranschaulicht werden.

Betrachtet man in einem ersten Zahlenbeispiel mit n = 2 lediglich zweistellige Binärzahlen und nimmt man an, daß A = -2, B = 0 und D = -1, was in der Zweierkomplement-Darstellung bedeutet A = 10, B = 00 und D = 11, so ergibt sich hierbei ein Zwischensummenwort s₁, s₀ = 0, 1 entsprechend dem Wert +1 sowie ein Übertragswort c₂, c₁ = 1, 0 entsprechend dem Wert -4. Da aber c₂ bei der Addition vernachlässigt werden soll, um nicht eigens hierfür einen weiteren Addierer ASₙ vorsehen zu müssen, haben wir es mit einem Überlaufeffekt zu tun, der bei Weglassung von c₂ zu einem Übertragswort c₁ = 0 entsprechend dem Wert 0 und damit mit den Teilsummen +1 (aus dem Zwischensummenwort) und 0 (aus dem Übertragswort) zu einem (fehlerhaften) Resultat +1 führt. Würde man jedoch das Übertragswort c₂, c₁ zulassen, so wäre die Teilsumme aus diesem -4, was ein (richtiges) Resultat von -3 ergäbe.

In einem zweiten Zahlenbeispiel mit n = 2 sollen A = 1, B = 1 und D = -1 betragen. Im Zweierkomplement entspricht das den Zahlen A = 01, B = 01 und D = 11. Die addition führt dann zu den Teilsummen s₁, s₀ = 1, 1 entsprechend dem Wert -1 und c₁ = 1 mit dem Wert von -2, d.h. zu dem fehlerhaften Resultat von -3. Nur wenn man wieder c₂ = 0 berücksichtigt, ergibt sich eine Teilsumme c₂, c₁ von 0, 1 mit dem Wert von +2 und damit zusammen mit s₁, s₀ das richtige Resultat +1. Laßt man c₂ aber weg, so ist auch hier ein Überlaufeffekt vorhanden.

Erfindungsgemäß ist nun dem höchstwertigen Addierer ADₙ₋₁ ein Korrekturglied 1 nachgeschaltet, das drei Eingänge 2 bis 4 aufweist. Von diesen ist der Eingang 2 mit cₙ belegt, der Eingang 3 mit sₙ₋₁ und der Eingang 4 mit cₙ₋₁. Ein Ausgang 5 des Korrekturgliedes 1 ist mit dem Eingang 21 von AS verbunden, ein zweiter Ausgang 6 mit dem Eingang 11 von AS. Im Korrekturglied 1 werden cₙ und cₙ₋₁ miteinander verglichen. Ergibt sich dabei, daß cₙ ‡ cₙ₋₁ so wird das bei 2 anliegende Übertragsbit cₙ anstelle von sₙ₋₁ auf den Ausgang 6 durchgeschaltet. Nur bei cₙ = cₙ₋₁ wird sₙ₋₁ auf den Ausgang 6 und damit auf den Eingang 11 gelegt. Das insoweit korrigierte Summenbit am Ausgang 6 wird als s₍ₙ₋₁₎ₖ bezeichnet. Der Ausgang 5 ist stets mit cₙ beschaltet, was in Fig. 1 durch eine gestrichelte Verbindung zwischen 2 und 5 angedeutet ist. Damit wird cₙ stets an den Eingang 21 von ASₙ₋₁ durchgeschaltet. Durch diese Maßnahmen gelingt es, die an den Ausgängen der Addierer ADᵢ entstehenden Zwischensummenworte und Übertragsworte beim Auftreten eines Überlaufeffektes so zu korrigieren, daß auch ohne Einsatz eines weiteren Addierers ASₙ in AS das richtige Resultat gebildet wird.

Im Falle des ersten Zahlenbeispiels werden durch das Korrekturglied folgende Korrekturen durchgeführt: c₁ wird ersetzt durch c₂ = 1, so daß sich bei Berücksichtigung des Stellenwertes von c₁ nunmehr hierfür die korrigierte Teilsumme -2 ergibt. Weiterhin beträgt s₁ₖ = 1, so daß das Summenwort s₁ₖ, s₀ zu 1, 1 wird und damit eine korrigierte Teilsumme von -1 ergibt. Beide korrigierten Teilsummen ergeben an den Ausgängen 31, 32 .. ein Summenwort, das dem gewünschten Additionsergebnis von -3 entspricht.

Beim zweiten Zahlenbeispiel ergeben sich durch das Korrekturglied 1 folgende Korrekturmaßnahmen: c₁ wird ersetzt durch c₂ = 0, so daß sich die korrigierte Teilsumme 0 ergibt. Weiterhin ist s₁ₖ = 0, so daß das Summenwort s₁ₖ, s₀ zu 0, 1 wird und damit einer korrigierten Teilsumme von +1 entspricht. Beide korrigierten Teilsummen ergeben dann an den Ausgängen 31, 32 ... ein Summenwort, das dem richtigen Additionsergebnis von +1 entspricht.

Die mittels des Korrekturgliedes 1 vorgenommenen Korrekturmaßnahmen sind auch bei einer Addition von drei- oder mehrstelligen Binärzahlen A, B und D anwendbar, da ja das Übertragsbit cₙ₋₂, das in diesem Fall nicht mehr zu vernachlässigen ist, in die genannten Korrekturmaßnahmen nicht einbezogen werden mußte.

Durch Zwischenspeicher 7, 9, 14 ... und 8, 10 ..., die den Eingängen 11, 12 ... und 21, 22 ... vorgeordnet sind, lassen sich Übertragsbits und Zwischensummenbits der Addierer ADᵢ zwischenspeichern und beim Auftreten eines Taktimpulses gemeinsam auf die Addierer ASᵢ übertragen. Eine solche Anordnung läßt sich in der Weise erweitern, daß die Ausgänge der Register 7, 9, 14 ... und 8, 10... den ersten und zweiten Eingängen einer Zeile von zweiten Addierern ADᵢ' zugeführt werden, wobei die Ausgänge von diesen nachgeordneten Registern 7', 9'... und 8', 10'... mit den Eingängen 11, 12 ... und 21, 22 ... von AS verbunden sind. Andererseits können der Zeile von zweiten Addierern in gleicher Weise aufgebaute Zeilen von dritten und vierten Addierern mit jeweils nachgeschalteten Zwischenspeichern folgen, wobei die Zwischenspeicherausgänge der letzten dieser Addiererzeilen mit den angegebenen Eingängen der Addiereinrichtung AS beschaltet sind. Die Zwischenspeicher werden dabei so getaktet, daß die Zwischensummen und Übertragsworte einer betrachteten Zeile übertragen jeweils gemeinsam auf die nächste Zeile werden, wobei die betrachtete Zeile mit demselben Takt mit den Zwischensummen- und Übertragsworten der vorhergehenden Zeile beaufschlagt wird, die zu einem anderen Additionsvorgang gehören.

Dieses System des schrittweisen Weitergebens der Additionsergebnisse von Zeile zu Zeile und der gleichzeitigen Bearbeitung verschiedener Additionsvorgänge in den einzelnen durch Zwischenspeicher jeweils voneinander getrennten Zeilen wird in der Literatur als "pipelining" bezeichnet. Hierzu sei auf die "IEEE Transactions on Computers", Vol. C-27, No. 9, Sept. 1978, S. 855-865 verwiesen. In jeder Addiererzeile ADᵢ, ADᵢ' usw. ist dem höchstwertigen Addierer ADₙ₋₁, ADₙ₋₁' usw. erfindungsgemäß jeweils ein Korrekturglied 1, 1' usw. nachgeschaltet, um Additionsfehler infolge von Überlaufeffekten zu vermeiden.

Fig. 2 zeigt die Anwendung der Erfindung auf eine Zeile von ersten Addierern ADᵢ, die zur bitparallelen Addition dreier Binärzahlen in einer rekursiven Schaltungsauslegung dienen. Die bereits anhand von Fig. 1 erläuterten Schaltungsteile sind hier mit denselben Bezugszeichen versehen. Den Schaltungspunkten 11, 12 ... und 21, 22 ... ist wieder die Addiereinrichtung AS mit den Ausgängen 31, 32 ... nachgeordnet. Die ersten Eingänge von ADᵢ sind jeweils mit den Ausgängen der Zwischenspeicher 7, 9, 14 ... beschaltet, die den Summenausgängen dieser Addierer nachgeordnet sind. Im einzelnen ist dabei der erste Eingang von ADₙ₋₁ mit dem Ausgang des Zwischenspeichers 7 beschaltet, der erste Eingang von ADₙ₋₂ mit dem Ausgang von 9, der erste Eingang ADₙ₋₃ mit dem Ausgang von 14 usw.. Die zweiten Eingänge von ADᵢ sind jeweils mit den Ausgängen derjenigen Zwischenspeicher 8, 10 .. beschaltet, die zur Zwischenspeicherung der in den Addierern der nächstniedrigeren Wertigkeit gebildeten Übertragsbits dienen. So ist z.B. der zweite Eingang von ADₙ₋₂ mit dem Ausgang von 10 beschaltet. Die dritten Eingänge der Addierer ADᵢ sind entsprechend Figur 1 mit den Bits dₙ₋₂, dₙ₋₃ ... d₀ einer Binärzahl D belegt.

Wird nun in einer Reihe von aufeinanderfolgenden Taktperioden eine Folge von Binärzahlen Di angelegt, die z.B. jeweils zugeordneten Amplitudenwerten eines analogen Signals entsprechen, und werden die Zwischenspeicher 7, 9, 14 ...und 8, 10 ...im gleichen Takt betrieben, so stehen am Ende der ersten Taktperiode in den Registern 7, 9, 14 usw. die von der ersten Zahl D abgeleiteten Zwischensummenbits s₍ₙ₋₁₎ₖ, sₙ₋₂, sₙ₋₃ zur Verfügung. Zu Beginn der zweiten Taktperiode liegen diese dann an den ersten Eingängen von ADᵢ, während die nächste Binärzahl D innerhalb der Folge den dritten Eingängen von ADᵢ zugeführt wird. Zu Beginn der dritten und aller weiteren Taktperioden liegen dann die Übertragsbits der Ausgänge der Zwischenspeicher 8, 10 usw. an den zweiten Eingängen von ADᵢ, die Zwischensummenbits der Ausgänge der Zwischenspeicher 7, 9, 14 usw. an den ersten Eingängen von ADᵢ und jeweils eine weitere Binärzahl D an den dritten Eingängen. Dabei erfolgt eine fortwährende Addition der aufeinanderfolgenden Binärzahlen Di. Eine solche rekursive Anordnung bezeichnet man als einen Akkumulator. Eine digitale Filterschaltung, bei der ein Akkumulator verwendet wird, kann z.B. den Proceedings of the IEEE, Vol. 63, No. 4, April 1975, S. 633-648, vgl. insbesondere Figuren 16 und 17 und zugehöriger Text, entnommen werden.

Das anhand von Fig. 1 beschriebene Korrekturglied 1 ist auch bei der rekursiven Schaltung nach Fig. 2 eingesetzt. Entsprechend Fig. 1 ist dabei der Eingang des Zwischenspeichers 8 mit dem Ausgang 5 von 1 beschaltet, der Ausgang von 8 mit dem Eingang 21 und mit dem zweiten Eingang von ADₙ₋₁. An den Schaltungspunkten 11, 12 ... und 21, 22 ... sind die korrigierten Zwischensummen- und Übertragsworte abgreifbar.

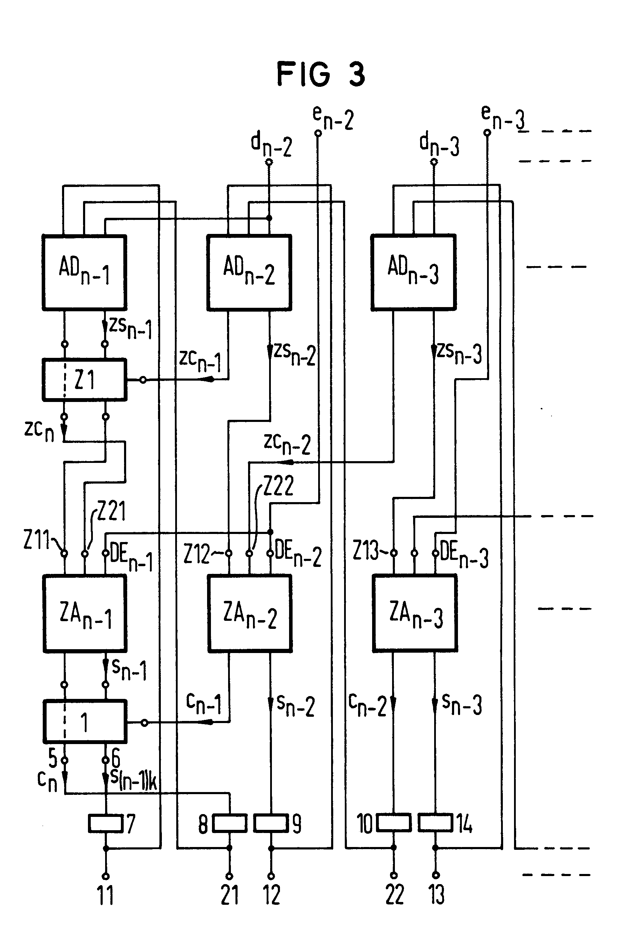

Fig. 3 zeigt eine Weiterbildung der Anordnung nach Fig. 2, die zur bitparallelen Addition von vier Binärzahlen im Zweierkomplement dient. Den bereits in Fig. 2 dargestellten Addierern ADᵢ sind hier jeweils zusätzliche, mit drei Eingängen versehene Addierer ZAᵢ nachgeschaltet. Die unteren Ausgangsseiten der Addierer ADᵢ sind in der bereits anhand von Fig. 2 erläuterten Weise beschaltet, jedoch mit dem Unterschied, daß die Zwischenspeicher 7, 9, 14 ... und 8, 10 ... entfallen, daß die rekursiven Verbindungen, die in Fig. 2 von den unteren Ausgangsseiten der Addierer Adᵢ jeweils zu den oberen Eingangsseiten derselben hin verlaufen, ebenfalls weggelassen sind und daß die in Fig. 2 unterhalb der Addierer ADᵢ angeordneten Schaltungspunkte 11, 12... und 21, 22 nunmehr zwischen den Zeilen der Addierer ADᵢ und der zusätzlichen Addierer ZAᵢ angeordnet sind. Daher sind diese Schaltungspunkte, die an ihnen auftretenden Signale sowie das Korrekturglied 1 mit denselben Bezugszeichen wie in Fig. 2 versehen, jedoch unter Hinzufügung eines "Z" bzw. "z". Die Schaltungspunkte Z11 und Z21 sind dabei mit den ersten beiden Eingängen von ZAₙ₋₁ beschaltet, die Schaltungspunkte Z12 und Z22 mit den ersten beiden Eingängen von ZAₙ₋₂, der Schaltungspunkt Z13 mit dem ersten Eingang von ZAₙ₋₃ usw..

Die zusätzlichen Addierer ZAᵢ sind an ihren unteren Ausgangsseiten in derselben Weise und mit den gleichen Schaltungsteilen beschaltet, wie die Addierer ADᵢ in Fig. 2. Dabei sind die rekursiven Verbindungen von den unteren Ausgangsseiten von ZAᵢ zu den oberen Eingangsseiten der Addierer ADᵢ geführt. Im einzelnen sind der Schaltungspunkt 11 mit dem ersten Eingang und der Schaltungspunkt 21 mit dem zweiten Eingang von ADₙ₋₁ verbunden, die Punkte 12 und 22 mit den ersten beiden Eingängen von ADₙ₋₂, der Punkt 13 mit dem ersten Eingang von ADₙ₋₃ usw..

Das an den Punkten 11, 12, 13 ... auftretende Zwischensummenwort stellt in Fig. 3 eine erste Binärzahl dar, das an den Punkten 21, 22 ... auftretende Übertragswort eine zweite Binärzahl, die entsprechend Fig. 2 an den dritten Eingängen von ADᵢ anliegende Zahl D eine dritte Binärzahl und eine an die dritten Eingänge DEᵢ der zusätzlichen Addierer ZAᵢ gelegte Zahl E eine vierte Binärzahl, die jeweils bitparallel zueinander addiert werden. An den Schaltungspunkten 11, 12 ... und 21, 22 ... treten wieder die Zwischensummen- und Übertragsworte auf, aus denen in einer Addiereinrichtung AS das gewünschte Summenwort gebildet wird. Die an den Ausgängen von ADₙ₋₁ und ADₙ₋₂ abgegriffenen Bits zsₙ₋₁ und zcₙ₋₁ werden in der anhand von Fig. 1 beschriebenen Weise mittels des Korrekturgliedes Z1 korrigiert, die an den Ausgängen von ZAₙ₋₁ und ZAₙ₋₂ auftretenden Bits sₙ₋₁ und cₙ₋₁ mittels des Korrekturgliedes 1.

Die Anordnung nach Fig. 3 kann in entsprechender Weise durch Hinzufügung weiterer, den Addierern ZAᵢ nachgeschalteter Addierer für eine Addition von fünf oder mehr Binärzahlen im Zweierkomplement erweitert werden. Innerhalb jeder solchen Addiererzeile ist nach der Erfindung eine Korrektur der von den beiden höchstwertigen Addierern abgegebenen Bits in der beschriebenen Weise, d.h. mittels der Korrekturglieder Z1, 1 und entsprechend ausgebildeter, weiterer Korrekturglieder, vorzunehmen. Aus mehreren Addiererzeilen gebildete Schaltungsanordnungen zur Addition von fünf oder mehr Binärzahlen sind beispielsweise aus dem Buch "Computer Arithmetic", von K. Hwang, Verlag John Wiley & Sons, New York, 1979, S. 100-103, vgl. insbesondere Fig. 4.3 entnehmbar.

Fig. 4 zeigt ein in CMOS-Technik ausgeführtes Schaltungsbeispiel des Addierers ADₙ₋₁, der den übrigen Addierern ADᵢ und ZAᵢ nach Aufbau und Wirkungsweise entspricht. Hierbei ist ein Schaltungspunkt P1 über drei jeweils zweigliedrige Transistor-Sereinschaltungen mit einem Anschluß 15 verbunden, der mit einer Versorgungsspannung V_{DD} beschaltet ist. Die erste Transistor-Serienschaltung besteht aus den P-Kanal-Schalttransistoren T1 und T2, die zweite aus den P-Kanal-Schalttransistoren T1 und T3, und die dritte aus den P-Kanal-Schalttransitoren T4 und T5. Das Gate von T1 ist über den mit dₙ₋₂ belegten dritten Einang von ADₙ₋₁ ansteuerbar, die Gates von T2 und T4 über den mit bₙ₋₁ belegten zweiten Eingang und die Gates von T3 und T5 über den mit aₙ₋₁ beschalteten ersten Eingang. Andererseits ist P1 über drei zweigliedrige Transistor-Serienschlaltungen mit einem Anschluß 16 verbunden, der mit Bezugspotential beschaltet ist. Diese Serienschaltungen T6 und T7, T6 und T8 sowie T9 und T10 sind jeweils aus N-Kanal-Feldeffekttransistoren aufgebaut. Das Gate von T6 wird mit dₙ₋₂ angesteuert, die Gates von T7 und T9 mit bₙ₋₁ und die Gates von T8 und T10 mit aₙ₋₁. Der Schaltungspunkt P1 entspricht einem Übertragsausgang AGC von ADₙ₋₁, an dem das invertierte Übertragssignal c̅ₙ abgreifbar ist.

Ein anderer Schaltungspunkt P2 ist über drei P-Kanal-Schalttransistoren T11 bis T13 jeweils mit dem Anschluß 15 verbunden, ein dritter Schaltungspunkt P3 über drei N-Kanal-Schalttransistoren T14 bis T16 mit dem Anschluß 16. Dabei sind T11 und T14 jeweils über dₙ₋₂ ansteuerbar, T12 und T15 jeweils über bₙ₋₁ und T13 und T16 jeweils über aₙ₋₁. Die Schaltungspunkte P2 und P3 sind über die Serienschaltung eines P-Kanal-Schalttransistors T17 und eines N-Kanal-Schalttransistors T18 miteinander verbunden, wobei die Gates von T17 und T18 mit P1 verbunden sind, während der Verbindungspunkt von T17 und T18 einen Ausgang AGS von ADₙ₋₁ darstellt, an dem das invertierte Summenbit s̅ₙ₋₁ auftritt. Dieser letztere Ausgang ist zusätzlich über eine dreigliedrige Serienschaltung von P-Kanal-Schalttransistoren T19 bis T21 mit 15 verbunden und über eine dreigliedrige Serienschaltung von N-Kanal-Schalttransistoren T22 bis T24 mit dem Schaltungspunkt 16. Dabei sind die Gates von T19 und T22 mit dₙ₋₂ ansteuerbar, die Gates von T20 und T23 mit bₙ₋₁ und die Gates von T21 und T24 mit aₙ₋₁.

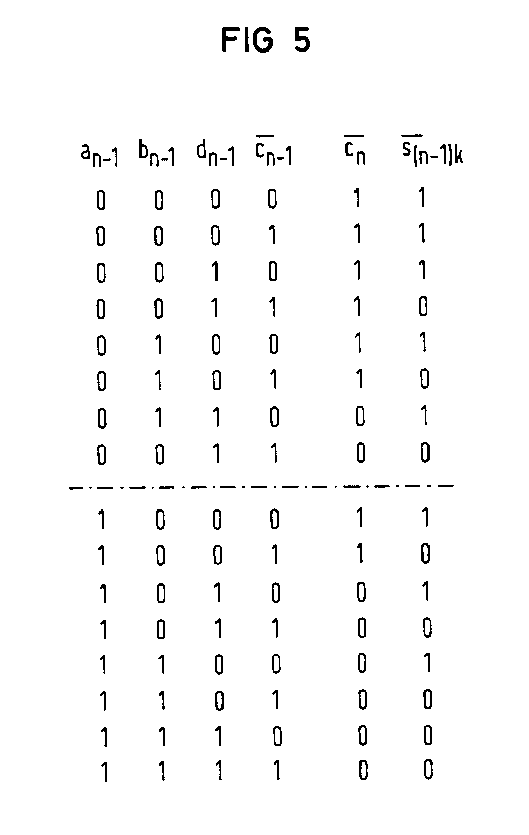

In Fig. 5 ist eine Funktionstabelle für die aus dem Addierer ADₙ₋₁ und dem nachgeschalteten Korrekturglied 1 bestehende Teilschaltung angegeben. In jeder Zeile sind zunächst die den vier Eingängen dieser Teilschaltung zugeführten Bits aₙ₋₁, bₙ₋₁, dₙ₋₁ und cₙ₋₁, letzteres allerdings in invertierter Form c̅ₙ₋₁, aufgeführt und in den letzten beiden Spalten dann jeweils die in Abahängigkeit davon an den Ausgängen 5 und 6 auftretenden Bits cₙ und s₍ₙ₋₁₎ₖ, wobei diese ebenfalls in invertierter Form als c̅ₙ und s̅₍ₙ₋₁₎ₖ angegeben sind.

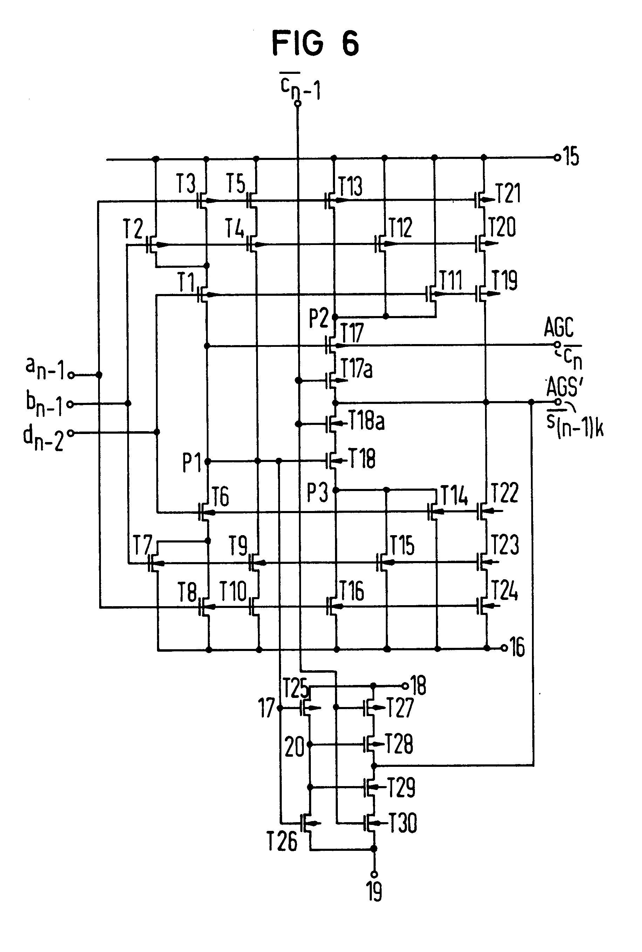

Fig. 6 zeigt ein in CMOS-Technik ausgeführtes Schaltungsbeispiel der aus ADₙ₋₁ und dem Korrekturglied 1 bestehenden Teilschaltung, die der Funktionstabelle nach Fig. 5 genügt. Diese Teilschaltung geht durch geringfügige Abänderungen bzw. Erweiterungen aus der Schaltung nach Fig. 3 hervor. Zu diesem Zweck werden zunächst die Transistoren T17 und T18 nach Fig. 3 voneinander getrennt und dann wieder durch die Serienschaltung eines P-Kanal-Schalttransistors T17a und eines N-Kanal-Schalttransistors T18a, deren Gates mit dem invertierten Übertragsbit c̅ₙ₋₁ ansteuerbar sind, miteinander verbunden. Der Verbindungspunkt von T17a und T18a stellt hier einen Ausgang AGS' dar, an dem das invertierte, korrigierte Summenbit s̅₍ₙ₋₁₎ₖ abgreifbar ist. Dabei liegt T17a zwischen AGS' und T17, während T18a zwischen AGS' und T18 angeordnet ist. P1 ist mit dem Eingang 17 eines Inverters verbunden, der aus der Serienschaltung eines P-Kanal-Schalttransistors T25 und eines N-Kanal-Schalttransistors T26 besteht. Diese Serienschaltung liegt zwischen einen Anschluß 18, der mit V_{DD} beschaltet ist und einem auf Bezugspotential liegenden Anschluß 19. Weiterhin ist eine viergliedrige Serienschaltung von Schalttransistoren T27 bis T30 vorgesehen, die ebenfalls zwischen den Anschlüssen 18 und 19 liegt.

T27 und T28 sind dabei als P-Kanal-Transistoren ausgebildet, T29 und T30 als N-Kanal-Transistoren. Der Verbindungspunkt der beiden innenliegenden Transistoren T28 und T29 dieser Serienschaltung ist mit dem Ausgang AGS' verbunden, wobei die Gates von T28 und T29 über den Ausgang 20 des Inverters T25, T26 angesteuert werden. Die Gates von T27 und T30 sind mit dem zugeführten invertierten Übertragsbit c̅ₙ₋₁ ansteuerbar. Für die Überlaufbedingung cₙ ‡ cₙ₋₁ ergibt sich bei dieser Schaltung, daß jeweils einer der Transistoren T17 oder T17a und außerdem jeweils einer der Transistoren T18 oder T18a sperrt, so daß der Ausgang AGS' sowohl von P2 als auch von P3 abgetrennt ist. Andererseits wird durch c̅ₙ₋₁ = 0 der Transistor T27 leitend geschaltet, was beim Vorliegen der Überlaufbedingung mit der dann am Ausgang 20 ebenfalls anliegenden 0 zur Leitendschaltung von T28 führt. Damit wird eine 1 an den Ausgang AGS' übertragen. Bei c̅ₙ₋₁ = 1 leitet T30, was wegen der Überlaufbedingung und der dann bei 20 anliegenden 1 zur Durchschaltung von T29 führt, so daß bei AGS' eine 0 abgreifbar ist.

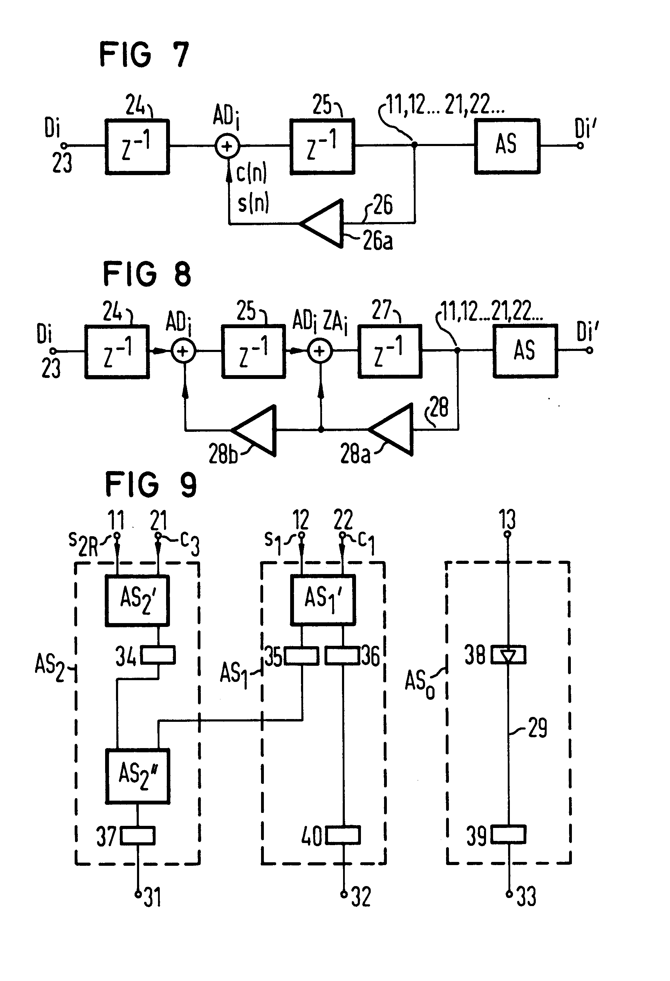

In Fig. 7 ist ein Rekursivfilter erster Ordnung gezeigt, das einen Akkumulator nach Fig. 2 enthält. Eine am Eingang 23 in aufeinanderfolgenden Taktperioden jeweils angelegte Folge von n-stelligen Binärzahlen Di, die im Zweierkomplement dargestellt sind und einer Folge von abgetasteten Amplitudenwerten eines analogen Eingangssignals entsprechen, werden dabei zunächst in einer Verzögerungsstufe 24, die aus n Zwischenspeichern besteht, bitparallel um eine Taktperiodendauer verzögert und sodann jeweils den dritten Eingängen des Akkumulators ADᵢ zugeführt. Die von diesem jeweils abgeleiteten Zwischensummen- und Übertragsworte werden in einer Verzögerungsstufe 25, die aus den Zwischenspeichern 7, 9, 14... und 8, 10 ... besteht, um eine weitere Taktperiodendauer verzögert und dann über eine Rekursivschleife 26 den ersten und zweiten Eingängen des Akkumulators zugeführt. Dabei können beide Worte in ihrer Zuordnung zu den einzelnen Addierern ADᵢ um m Bit nach rechts bzw. links verschoben werden, was einer Multipliktion mit 2^{-m} bzw. 2^{m} in einem Bewerter 26a entspricht. Die über 26 zugeführten Worte werden zu der jeweils mit dem nächstfolgenden Takt an den dritten Eingängen von ADᵢ anliegenden Binärzahl D addiert. Die am Ausgang der Verzögerungsstufe 25 auftretenden Zwischensummen- und Übertragsworte werden der Addiereinrichtung AS über ihre Eingänge 11, 12 ... 21, 22 zugeführt und zu dem gefilterten, digitalen Ausgangssignal Di' zusammengesetzt.

Fig. 8 zeigt ein rekursives Filter zweiter Ordnung, das sich von Fig. 7 dadurch unterscheidet, daß die von 25 abgegebenen Zwischensummen- und Übertragsworte einem Akkumulator nach Fig. 3 zugeführt werden, der mit ADᵢ, ZAᵢ angedeutet ist. Die von diesem abgegebenen Zwischensummen- und Übertragsworte werden in einer Verzögerungsstufe 27 (die den Registern 7, 9, 14... und 8, 10... von Fig. 3 entspricht) um eine Taktperiodendauer verzögert und über eine Rekursivschleife 28 sowohl den ersten beiden Eingängen des Akkumulators ADᵢ als auch den ersten beiden Eingängen des Akkumulators ADᵢ, ZAᵢ zugeführt.

Beide Worte können wieder in ihrer Zuordnung zu den einzelnen Addierern ADᵢ des Akkumulators nach Fig. 3 um m Bit nach rechts bzw. links verschoben werden, was einer Multiplikation mit 2^{-m1} bzw. 2^{m1} in einem Bewerter 28 a entspricht. Die so bewerteten Worte können dann weiterhin in ihrer Zuordnung zu den einzelnen Addierern ADᵢ des Akkumulators nach Fig. 2 um m2 Bit nach rechts bzw. links verschoben werden, was einer weiteren Multiplikation mit 2^{-m2} bzw. 2^{m2} in einem Bewerter 28b entspricht.

Der dritte Eingang von ADᵢ ist mit Di belegt, der dritte und vierte Eingang von ADᵢ, ZAᵢ mit den von 25 abgegebenen Zwischensummen- und Übertragsworten des ersten Akkumulators ADᵢ. Die am Ausgang der Verzögerungsstufe 27 auftretenden Zwischensummen- und Übertragsworte werden der Addiereinrichtung AS über ihre Eingänge 11, 12 ... 21, 22 ... zugeführt und zu dem gefilterten, digitalen Ausgangssignal Di' zusammengesetzt.

In einem rekursiven Filter n'ter Ordnung können in analoger Weise ein Akkumulator nach Fig. 2 und n-1 Akkumulatoren nach Fig. 3 eingesetzt werden.

In Fig. 9 ist ein Schaltungsbeispiel der Addiereinrichtung AS für dreistellige Binärzahlen (n = 3) dargestellt. Der Addierer AS₂ weist hier zwei Halbaddierer AS₂' und AS₂'' auf, der Addierer AS₁ einen Halbaddierer As₁'. Die Eingänge 11 und 21 (Fig. 1) stellen die Eingänge von AS₂' dar, 12 und 22 die Eingänge von AS₁'. Der "Addierer" kleinster Wertigkeit AS₀, dem über den Eingang 13 nur ein Summenbit s₀, aber kein Übertragsbit zugeführt wird, vereinfacht sich hierbei zu einer Leitung 29, die 13 mit dem Ausgang 33 verbindet. Der Halbaddierer AS₁', dem über die Eingänge 12 und 22 das Summenbit s₁ und das Übertragsbit c₁ zugeführt werden, liefert ein Summenbit an den Ausgang 32 und ein Übertragsbit an den einen Eingang des Halbaddierers AS₂'', dessen anderer Eingang mit dem vom AS₂' abgegebenen Summenbit beaufschlagt wird. AS₂'' liefert dann ein Summenbit an den Ausgang 31. Dan Ausgängen der Halbaddierer AS₂' und AS₁' sind Zwischenspeicher 34 bis 36 nachgeschaltet, dem Ausgang von AS₂'' ein Zwischenspeicher 37. Durch Einfügung von weiteren Zwischenspeichern 38, 39 und 40 in die Leitung 29 bzw. zwischen den Ausgang des Registers 36 und den Ausgang 32 wird erreicht, daß die das Resultat bildenden Summenbits gleichzeitig an die Ausgänge 31 bis 33 gelangen.

Die Zwischenspeicher 34 bis 40 werden im gleichen Takt betrieben wie die Zwischenspeicher 7, 9, 14... und 8, 10 ...usw.. Wegen der für die Halbaddierer ASᵢ' ASᵢ'' geltenden relativ kurzen Bearbeitungszeiten ist es zweckmäßig, jeweils zwei Addiererzeilen von AS zu einer Doppelzeile zusammenzufassen, wobei jeder solchen Doppelzeile eine Zeile von Zwischenspeichern nachgeschaltet wird. In Fig. 9 würde das bedeuten, daß die Zwischenspeicher 34 bis 36 und 38 entfallen. Eine Erweiterung der 3-Bit-Addiereinrichtung AS von Fig. 9 auf vier- und mehrstellige Binärzahlen wird in der Weise vorgenommen, daß für jede hinzutretende Stelle die Zeilen der Halbaddierer jeweils nach links um einen Halbaddierer ergänzt werden, wobei sich gleichzeitig die Anzahl der Zeilen jeweils um eine erhöht. Eine gemäß Fig. 9 aufgebaute Addierstufe zur Addition von vierstelligen Summen- und und Übertragsworten ist den IEEE Transactions on Computers, Vol. C-27, No. 9, Sept. 1978, S. 863-864, insbesondere Fig. 7b, zu entnehmen.

Sämtliche Zwischenspeicher 7, 9, 14 ... und 8, 10 ... sowie 34 ... 40 sind zweckmäßigerweise als Schieberegisterstufen in Form von Master-Slave-Flipflops ausgebildet.

In Abweichung von den Ausführungsbeispielen nach den Figuren 1 bis 3 können außer den beiden höchstwertigen Addierern, z.B. ADₙ₋₁ und ADₙ₋₂, jeder Gruppe auch noch weitere Addierer sich anschließender Wertigkeiten, z.B. ADₙ₋₃ und ADₙ₋₄, jeweils über ihre dritten Eingänge mit ein- und demselben Bit einer zugeführten Binärzahl D bzw. E belegt sein. Das entspricht dann einer Vorzeichenvervielfachung der im Zweierkomplement dargestellten Binärzahlen.

### Bezugszeichenliste

- 1: Korrekturglied
- 2 bis 4: Eingänge von 1
- 5, 6: Ausgänge von 1
- 7 bis 10, 14: Zwischenspeicher
- 15, 16: Anschlüsse
- 11, 12, 13: Eingänge von AS
- 21, 22 ..: Eingänge von AS
- 31, 32 33: Ausgänge von AS
- 17: Invertereingang
- 24, 25: Verzögerungsstufen
- 26: Rekursivschleife
- 26a: Bewerter
- 27: Verzögerungsstufe
- 28: Rekursivschleife
- 28a: Bewerter
- 28b: Bewerter
- 29: Leitung
- 34 bis 40: Zwischenspeicher
- Adᵢ: Addierer
- A: Binärzahl
- aᵢ: Bits von A
- B: Binärzahl
- bᵢ: Bits von B
- D: Binärzahl
- dᵢ: Bits von D
- sᵢ: Bits eine Zwischensummenwortes
- cᵢ: Bits eines Übertragsworts
- AS: Addiereinrichtung
- Asᵢ: Addierer von AS
- Di: Binärzahlen
- ZAᵢ: zusätzliche Addierer
- Z11, Z12, Z13: Eingänge von ZAᵢ
- Z21, Z22: Eingänge von ZAᵢ
- DEᵢ: Eingänge von ZA
- E: Binärzahl
- eᵢ: Bits von E
- Z1: Korrekturglied
- P1, P2, P3: Schaltungspunkte
- T1 bis T30: Feldeffekt-Schalttransistoren
- T17a, T18a: Feldeffekt-Schalttransistoren
- As₁', AS₂', AS₂'': Halbaddierer

## Patentansprüche

1. Anordnung zur bitparallelen Addition von Binärzahlen im Zweierkomplement mit einer Gruppe von ersten Addierern (ADᵢ), die jeweils Eingänge für Binärzahlenbits gleicher Wertigkeit sowie einen Summen- und einen Übertragsausgang zur Abgabe eines Zwischensummen- und eines Übertragsbits aufweisen, und mit einer Addiereinrichtung (AS) zur Bildung eines Summenwortes aus einem aus Übertragsbits bestehenden Übertragswort und einem aus Zwischensummenbits bestehenden Zwischensummenwort, **dadurch gekennzeichnet,** daß das Übertragsbit (cₙ₋₁) des ersten Addierers (ADₙ₋₁) mit der zweithöchsten Wertigkeit durch das Übertragsbit (cₙ) des höchstwertigen ersten Addierers (ADₙ₋₁) ersetzt wird und daß dem höchstwertigen ersten Addierer (ADₙ₋₁) ein erstes Korrekturglied (1) nachgeschaltet ist, in dem das Zwischensummenbit (sₙ₋₁) dieses Addierers für den Fall, daß die Übertragsbits (cₙ, cₙ₋₁) der beiden höchstwertigen ersten Addierer (ADₙ₋₁, ADₙ₋₂) ungleich sind, durch das Übertragsbit (cₙ) des höchstwertigen ersten Addierers (ADₙ₋₁) ersetzt wird.

2. Anordnung nach Anspruch 1, **dadurch gekennzeichnet,** daß von den ersten Addierern (ADᵢ) einschließlich des ersten Korrekturgliedes (1) gewonnene erste Zwischensummen- und Übertragsbits insbesondere über erste Zwischenspeicher (7, 9, 14 .., 8, 10 ..) an die Addiereinrichtung (AS) abgegeben werden.

3. Anordnung nach Anspruch 1, **dadurch gekennzeichnet,** daß von den ersten Addierern (ADᵢ) einschließlich des ersten Korrekturgliedes (1) gewonnene, erste Zwischensummen- und Übertragsbits über erste Zwischenspeicher (7, 9, 14..., 8, 10...) abgegeben werden, daß den ersten Zwischenspeichern wenigstens eine weitere Gruppe von Addierern nachgeschaltet ist, wobei die Addierer einer solchen weiteren Gruppe jeweils Eingänge für gleichwertige Zwischensummen- und Übertragsbits von der jeweils unmittelbar vorgeordneten Gruppe von Addierern sowie Summen- und Übertragsausgänge zur Abgabe von Zwischensummen- und Übertragsbits über weitere Zwischenspeicher an die jeweils unmittelbar nachgeordnete Gruppe von Addierern oder im Falle der letzten Gruppe an die Addiereinrichtung (AS) aufweisen und daß den höchstwertigen Addierern aller weiteren Gruppen jeweils dem ersten Korrekturglied (1) entsprechende weitere Korrekturglieder nachgeschaltet sind.

4. Anordnung nach Anspruch 2, **dadurch gekennzeichnet,** daß entweder die ersten Eingänge der ersten Addierer (ADᵢ) jeweils mit den zur Abgabe der ersten Zwischensummenbits dienenden ersten Zwischenspeichern (7, 9, 14...) derselben ersten Addierer und daß die zweiten Eingänge der ersten Addierer (ADᵢ) jeweils mit den zur Abgabe von Übertragsbits dienenden ersten Zwischenspeichern (8, 10...) von ersten Addierern der nächstniedrigen Wertigkeit verbunden sind, oder eine hiervon abweichende Zuordnung der ersten Addierer zu den ersten Zwischenspeichern getroffen ist, bei der die Wertigkeiten der eingangsseitig mit den Zwischensummen- und Übertragsbits beaufschlagten ersten Addierer gegenüber der angegebenen Zuordnung jeweils um eine konstante Stellenzahl differieren, daß die Zwischenspeicher (7, 9, 14..., 8, 10...) mit Taktimpulsen einer vorgegebenen Taktfrequenz beaufschlagt sind und daß dritte Eingänge der ersten Addierer (ADᵢ) mit einer Folge von binären Zahlen (Di) belegt sind, wobei diese Belegung im Rhythmus der Taktfrequenz erfolgt.

5. Anordnung nach Anspruch 3, **dadurch gekennzeichnet**, daß entweder die ersten Eingänge der ersten Addierer (ADᵢ) mit den zur Abgabe der Summenbits dienenden Zwischenspeichern (7, 9, 14 ...) von Addierern (ZAᵢ) derselben Wertigkeit einer der weiteren Gruppen von Addierern (ZAᵢ) und die zweiten Eingänge der ersten Addierer (ADᵢ) jeweils mit den zur Abgabe der Übertragsbits dienenden Zwischenspeichern (8, 10...) von Addierern (ZAᵢ) der nächstniedrigeren Wertigkeit dieser weiteren Gruppe verbunden sind, oder eine hiervon abweichende Zuordnung der ersten Addierer zu den Zwischenspeichern getroffen ist, bei der die Wertigkeiten der eingangssseitig mit den Zwischensummen- und Übertragsbits beaufschlagten ersten Addierer gegenüber der angegebenen Zuordnung jeweils um eine konstante Stellenzahl differieren, daß die Zwischenspeicher mit Taktimpulsen einer vorgegebenen Taktfrequenz getaktet werden, daß dritte Eingänge der ersten Addierer (ADᵢ) sowie dritte Eingänge der in den weiteren Gruppen enthaltenen Addierer (ZAᵢ) jeweils mit Folgen von binären Zahlen (Di, Ei) belegt sind und daß diese Belegung im Rhythmus der Taktfrequenz erfolgt.

6. Anordnung nach einem der Ansprüche 1 bis 5, **dadurch gekennzeichnet,** daß ein Addierer (ADₙ₋₁) mit nachgeschaltetem Korrekturglied (1) in der Weise aufgebaut ist, daß ein erster Schaltungspunkt (P1) über drei jeweils zweigliedrige Serienschaltungen von Feldeffekttransistoren eines ersten Kanaltyps (T1, T2; T1, T3; T4, T5) mit einem ersten Anschluß (15) verbunden ist, der mit einer Versorgungsspannung belegt ist, daß der erste Schaltungspunkt (P1) über drei jeweils zweigliedrige Serienschaltungen von Feldeffekttransistoren eines zweiten Kanaltyps (T6, T7; T6, T8; T9, T10) mit einem zweiten Anschluß (16) verbunden ist, der auf Bezugspotential liegt, daß ein zweiter Schaltungspunkt (P2) über drei Feldeffekttransistoren des ersten Kanaltyps (T11, T12, T13) mit dem ersten Anschluß (15) verbunden ist, daß ein dritter Schaltungspunkt (P3) über drei Feldeffekttransistoren des zweiten Kanaltyps (T14, T15, T16) mit dem zweiten Anschluß (16) beschaltet ist, daß der zweite Schaltungspunkt (P2) über die Serienschaltung zweier Feldeffekttransistoren des ersten Kanaltyps (T17, T17a) mit dem inversen Summenausgang (AGS') des Korrekturgliedes (1) verbunden ist, daß der dritte Schaltungspunkt (P3) über die Serienschaltung zweier Feldeffekttransistoren des zweiten Kanaltys (T18, T18a) mit diesem inversen Summenausgang (AGS') verbunden ist, daß die Gates der Transistoren der zweigliedrigen Serienschaltungen über drei Eingänge des Addierers so ansteuerbar sind, daß Signale an jeweils zwei der drei Eingängen jeweils eine dieser Serienschaltungen aus Transistoren des ersten Kanaltyps in den leitenden Zustand schalten, wobei inverse Signale an den zuletzt betrachteten zwei Eingängen jeweils eine der drei zweigliedrigen Serienschaltungen aus Transistoren des zweiten Kanaltyps in den leitenden Zustand schalten, daß die Gates der drei Feldeffekttransistoren des ersten Kanaltyps, die zwischen dem zweiten Schaltungspunkt (P2) und dem ersten Anschluß (15) liegen, und die Gates der drei Feldeffekttransistoren des zweiten Kanaltyps, die zwischen dem dritten Schaltungspunkt (P3) und dem zweiten Anschluß (16) angeordnet sind, jeweils mit einem der Eingänge des Addierers verbunden sind, daß der erste Schaltungspunkt (P1) mit dem inversen Übertragsausgang (AGC) des Addierers verbunden ist, daß die Gates jeweils eines der Transistoren der Serienschaltungen zwischen dem zweiten Schaltungspunkt (P2) und dem inversen Summenausgang (AGS') sowie dem dritten Schaltungspunkt (P3) und diesem inversen Summenausgang über den ersten Schaltungspunkt (P1) ansteuerbar sind, während die Gates der anderen beiden Transistoren dieser Serienschaltungen mit dem inversen Übertragsausgang des Addierers der nächstniedrigeren Wertigkeit beschaltet sind, daß der inverse Summenausgang (AGS') über eine dreigliedrige Serienschaltung von Feldeffekttransistoren des ersten Kanaltyps (T19, T20, T21) mit dem ersten Anschluß (15) und über eine dreigliedrige Serienschaltung von Feldeffekttransistoren des zweiten Kanaltyps (T22, T23, T24) mit dem zweiten Anschluß (16) verbunden ist, wobei die Feldeffekttransistoren jeder dieser Serienschaltungen jeweils über einen Eingang des Addierers ansteuerbar sind, daß der inverse Summenausgang (AGS') sowohl über zwei Schalttransistoren des ersten Kanaltyps (T27, T28) mit einem dritten Anschluß (18) beschaltet ist, der mit der Versorgungsspannung belegt ist, als auch über zwei Schalttransistoren des zweiten Kanaltyps (T29, T30) mit einem vierten Anschluß (19) verbunden ist, der auf Bezugspotential liegt, und daß die Gates eines der letztgenannten Schalttransistoren des ersten und eines der letztgenannten Schalttransistoren des zweiten Kanaltyps (T27, T30) über den inversen Übertragsausgang des Addierers der nächstniedrigeren Wertigkeit und die beiden übrigen der letztgenannten Schalttransistoren über den Ausgang (20) eines Inverters (T25, T26) ansteuerbar sind, dessen Eingang (17) mit dem ersten Schaltungspunkt (P1) verbunden ist.

7. Anwendung einer Anordnung nach Anspruch 2 auf ein digitales Filter, **dadurch gekennzeichnet,** daß die ersten Addierer (ADᵢ) zur Addition von über eine Rekursivschleife (26, 28) des digitalen Filters zugeführten Zwischensummen- und Übertragsworten mit über die dritten Eingänge der ersten Addierer (ADᵢ) zugeführten, abgetasteten, digitalisierten Amplitudenwerten eines Eingangssignals (Di) des digitalen Filters dienen, wobei zur Abgabe der ersten Zwischensummen- und Übertragsbits dienende Zwischenspeicher eine Verzögerungsstufe (25) bilden, und daß die Addiereinrichtung (AS) zur Bildung der digitalisierten Amplitudenwerte des gefilterten Eingangsignals (Di') dient.

8. Anwendung einer Anordnung nach Anspruch 5, mit einer einzigen weiteren Gruppe von Addierern auf ein digitales Filter, **dadurch gekennzeichnet,** daß die ersten Addierer (ADᵢ₎ und die Addierer (ZAᵢ) der weiteren Gruppe zur Addition von über eine Rekursivschleife (28) eines digitalen Filters zweiter Ordnung den ersten beiden Eingängen der ersten Addierer zugeführten Summen- und Übertragsworten mit über die dritten Eingänge der ersten Addierer (ADᵢ) und über die dritten Eingänge der Addierer (ZAᵢ) der weiteren Gruppe zugeführten Summen- und Übertragsworten eines ersten Akkumulators dienen, wobei die zur Abgage der Zwischensummen- und Übertragsworte der Addierer (ZAᵢ) der weiteren Gruppe dienenden Zwischenspeicher eine Verzögerungsstufe (27) bilden, und daß die Addiereinrichtung (AS) zur Bildung der digitalisierten Amplitudenwerte des gefilterten Eingangssignals (Di') dient.

9. Anordnung nach einem der Ansprüche 1 bis 8, **dadurch gekennzeichnet,** daß die Addiereinrichtung (AS) eine erste Gruppe von Halbaddierern (AS₂', AS₁') enthält, deren erste Eingänge jeweils mit den der Addiereinrichtung eingangsseitig zugeführten Zwischensummenbits und deren zweite Eingänge jeweils mit den eingangsseitig zugeführten Übertragsbits belegt sind, daß jeweils ein von einem Halbaddierer (AS₂') der ersten Gruppe abgegebenes Summenbit zusammen mit einem von dem Halbaddierer (AS₁') nächst niedrigerer Wertigkeit der ersten Gruppe abgegebenen Übertragsbit den Eingängen eines Halbaddierers (AS₂'') einer zweiten Gruppe von Halbaddierern zugeführt werden, daß in analoger Weise mit Zwischensummenbits und Übertragsbits belegte weitere Gruppen von Halbaddierern vorgesehen sind, daß die Übertragsbits der jeweils höchstwertigen Halbaddierer der einzelnen Gruppen vernachlässigt werden und daß die von Halbaddierern (AS₁', AS₂'') abgegebenen Summenbits, denen keine Übertragsbits der nächstnierdrigeren Wertigkeit mehr zugeordnet sind, jeweils die Summenbits des das Additionsergebnis darstellenden Summenworts bilden.

10. Anordnung nach einem der Ansprüche 1 bis 9, **dadurch gekennzeichnet,** daß die Zwischenspeicher als Schieberegisterstufen ausgebildet und vorzugsweise in Form von Master-Slave-Flipflops realisiert sind.

## Claims

1. Arrangement for the bit-parallel addition of binary numbers in two's complement, with a group of first adders (ADᵢ), each having inputs for binary number bits of equivalent significance as well as a sum output and a carry output for outputting an intermediate sum bit and a carry bit, and with an adder means (AS) for forming a sum word from a carry word comprising carry bits and an intermediate sum word comprising intermediate sum bits, characterised in that the carry bit (Cₙ₋₁) of the first adder (ADₙ₋₁) having the second-highest significance is replaced by the carry bit (cₙ) of the most significant first adder (ADₙ₋₁), and in that connected downstream of the most significant first adder (ADₙ₋₁) is a first correction element (1), in which the intermediate sum bit (Sₙ₋₁) of said adder is replaced by the carry bit (cₙ) of the most significant first adder (ADₙ₋₁) in the case where the carry bits (cₙ, cₙ₋₁) of the two most significant first adders (ADₙ₋₁, ADₙ₋₂) are not equal.

2. Arrangement according to Claim 1, characterised in that first intermediate sum bits and carry bits obtained from the first adders (ADᵢ) including the first correction element (1) are output to the adder means (AS), preferably via first intermediate memories (7, 9, 14 .., 8, 10 ..).

3. Arrangement according to Claim 1, characterised in that first intermediate sum bits and carry bits obtained from the first adders (ADᵢ) including the first correction element (1) are output via first intermediate memories (7, 9, 14..., 8, 10...), in that at least one further group of adders is connected downstream of the first intermediate memories, the adders of such a further group having in each case inputs for equivalent intermediate sum bits and carry bits from the respective immediately preceding group of adders as well as sum outputs and carry outputs for outputting intermediate sum bits and carry bits via further intermediate memories to the respective immediately following group of adders or, in the case of the last group, to the adder means (AS), and in that further correction elements corresponding to the first correction element (1) in each case are connected downstream of the most significant adders of all further groups.

4. Arrangement according to Claim 2, characterised in that either the first inputs of the first adders (ADᵢ) are connected in each case to the first intermediate memories (7, 9, 14...), serving to output the first intermediate sum bits, of the same first adders, and that the second inputs of the first adders (ADᵢ) are connected in each case to the first intermediate memories (8, 10...), serving to output carry bits, of first adders having the next-lower significance, or an assignment of the first adders to the first intermediate memories differing from this is made, in which the significances of the first adders receiving the intermediate sum bits and carry bits on the input side differ from the stated arrangement by a constant number of positions in each case, in that the intermediate memories (7, 9, 14..., 8, 10...) receive clock pulses of a predetermined clock frequency, and in that a series of binary numbers (Di) is applied to third inputs of the first adders (ADᵢ), said numbers being applied in the rhythm of the clock frequency.

5. Arrangement according to Claim 3, characterised in that either the first inputs of the first adders (ADᵢ) are connected to the intermediate memories (7, 9, 14...), serving to output the sum bits, of adders (ZAᵢ) having the same significance of one of the further groups of adders (ZAᵢ) and the second inputs of the first adders (ADᵢ) are connected in each case to the intermediate memories (8, 10...), serving to output the carry bits, of adders (ZAᵢ) having the next-lower significance of said further group, or an assignment of the first adders to the intermediate memories differing from this is made, in which the significances of the first adders receiving the intermediate sum bits and carry bits on the input side differ from the stated arrangement by a constant number of positions in each case, in that the intermediate memories are clocked with clock pulses of a predetermined clock frequency, in that series of binary numbers (Di, Ei) are applied in each case to third inputs of the first adders (ADᵢ) and also to third inputs of the adders (ZAᵢ) contained in the further groups, and in that said numbers are applied in the rhythm of the clock frequency.

6. Arrangement according to one of Claims 1 to 5, characterised in that an adder (ADₙ₋₁) is constructed with downstream correction element (1) in such a way that a first circuit point (P1) is connected via three, in each case two-element, series circuits of field effect transistors of a first channel type (T1, T2; T1, T3; T4, T5) to a first terminal (15) which receives a supply voltage, in that the first circuit point (P1) is connected via three, in each case two-element, series circuits of field effect transistors of a second channel type (T6, T7; T6, T8; T9, T10) to a second terminal (16) which is connected to reference potential, in that a second circuit point (P2) is connected via three field effect transistors of the first channel type (T11, T12, T13) to the first terminal (15), in that a third circuit point (P3) is connected via three field effect transistors of the second channel type (T14, T15, T16) to the second terminal (16), in that the second circuit point (P2) is connected via the series circuit of two field effect transistors of the first channel type (T17, T17a) to the inverse sum output (AGS') of the correction element (1), in that the third circuit point (P3) is connected via the series circuit of two field effect transistors of the second channel type (T18, T18a) to said inverse sum output (AGS'), in that the gates of the transistors of the two-element series circuits can be driven via three inputs of the adder in such a way that signals at in each case two of the three inputs switch in each case one of said series circuits of transistors of the first channel type into the conductive state, in which inverse signals at the last-mentioned two inputs switch in each case one of the three two-element series circuits of transistors of the second channel type into the conductive state, in that the gates of the three field effect transistors of the first channel type which are situated between the second circuit point (P2) and the first terminal (15), and the gates of the three field effect transistors of the second channel type which are arranged between the third circuit point (P3) and the second terminal (16) are connected in each case to one of the inputs of the adder, in that the first circuit point (P1) is connected to the inverse carry output (AGC) of the adder, in that the gates of in each case one of the transistors of the series circuits between the second circuit point (P2) and the inverse sum output (AGS') and also the third circuit point (P3) and said inverse sum output can be driven via the first circuit point (P1), while the gates of the other two transistors of said series circuits are connected to the inverse carry output of the adder having the next-lower significance, in that the inverse sum output (AGS') is connected via a three-element series circuit of field effect transistors of the first channel type (T19, T20, T21) to the first terminal (15) and via a three-element series circuit of field effect transistors of the second channel type (T22, T23, T24) to the second terminal (16), in which the field effect transistors of each of said series circuits can be driven in each case via an input of the adder, in that the inverse sum output (AGS') is connected both to a third terminal (18), which receives the supply voltage, via two switching transistors of the first channel type (T27, T28), and to a fourth terminal (19), which is connected to reference potential, via two switching transistors of the second channel type (T29, T30), and in that the gates of one of the aforesaid switching transistors of the first channel type and one of the aforesaid switching transistors of the second channel type (T27, T30) can be driven via the inverse carry output of the adder having the next-lower significance, and the two others of the aforesaid switching transistors can be driven via the output (20) of an inverter (T25, T26), the input (17) of which is connected to the first circuit point (P1).

7. Application of an arrangement according to Claim 2 in a digital filter, characterised in that the first adders (ADᵢ) serve for the addition of intermediate sum words and carry words supplied via a recursive loop (26, 28) of the digital filter to sampled, digitised amplitude values, supplied via the third inputs of the first adders (ADᵢ), of an input signal (Di) of the digital filter, in which intermediate memories serving to output the first intermediate sum bits and carry bits form a delay stage (25), and in that the adder means (AS) serves to form the digitised amplitude values of the filtered input signal (Di').

8. Application of an arrangement according to Claim 5 with a single further group of adders in a digital filter, characterised in that the first adders (ADᵢ) and the adders (ZAᵢ) of the further group serve for the addition of sum words and carry words supplied via a recursive loop (28) of a second-order digital filter to the first two inputs of the first adders to sum words and carry words of a first accumulator supplied via the third inputs of the first adders (ADᵢ) and via the third inputs of the adders (ZAᵢ) of the further group, in which the intermediate memories serving to output the intermediate sum words and carry words of the adders (ZAᵢ) of the further group form a delay stage (27), and in that the adder means (AS) serves to form the digitised amplitude values of the filtered input signal (Di').

9. Arrangement according to one of Claims 1 to 8, characterised in that the adder means (AS) contains a first group of half-adders (AS₂', AS₁'), the first inputs of which receive in each case the intermediate sum bits supplied to the adder means on the input side, and the second inputs of which receive in each case the carry bits supplied on the input side, in that in each case a sum bit output by a half-adder (AS₂') of the first group together with a carry bit output by the half-adder (AS₁') having the next-lower significance of the first group are supplied to the inputs of a half-adder (AS₂'') of a second group of half-adders, in that further groups of half-adders which receive intermediate sum bits and carry bits in an analogous manner are provided, in that the carry bits of the respective most significant half-adders of the individual groups are disregarded, and in that the sum bits output by half-adders (AS₁', AS₂'') to which no carry bits of the next-lower significance are assigned any more form in each case the sum bits of the sum word constituting the result of addition.

10. Arrangement according to one of Claims 1 to 9, characterised in that the intermediate memories are designed as shift register stages and are preferably realised in the form of master-slave flip-flops.

## Revendications

1. Dispositif pour réaliser l'addition, parallèle au niveau des bits de nombres binaires dans le système de complémentation à deux, comportant un groupe de premiers additionneurs (ADᵢ), qui comportent respectivement des entrées pour des bits de nombres binaires de même poids ainsi qu'une sortie pour la somme et une sortie de report pour la délivrance d'une somme intermédiaire et d'un bit de report, et un dispositif additionneur (AS) servant à former un mot de somme constitué par un mot de report formé à partir de bits de report, et par un mot de somme intermédiaire, constitué par des bits de la somme intermédiaire, caractérisé par le fait que le bit de report (cₙ₋₁) du premier additionneur (ADₙ₋₁) possédant le poids le plus élevé en second est remplacé par le bit de report (cₙ) du premier additionneur (ADₙ₋₁) possédant le poids le plus élevé et qu'en aval du premier additionneur (ADₙ₋₁) possédant le poids le plus élevé est branché un premier circuit de correction (1), dans lequel le bit de somme intermédiaire (sₙ₋₁) de cet additionneur est remplacé, dans le cas où les bits de report (cₙ, cₙ₋₁) des deux premiers additionneurs (ADₙ₋₁, ADₙ₋₂) qui possèdent des poids maximum, sont identiques, par le bit de report (cₙ) du premier additionneur (ADₙ₋₁) possédant le poids maximum.

2. Dispositif suivant la revendication 1, caractérisé par le fait que des premiers bits de somme intermédiaire et de report, fournis par les premiers additionneurs (ADᵢ), y compris le premier circuit de correction (1), sont délivrés notamment par l'intermédiaire des premières mémoires intermédiaires (7,9,14..., 8,10...), sont envoyés au dispositif additionneur (AS).

3. Dispositif suivant la revendication 1, caractérisé par le fait que les premiers bits de somme intermédiaire et de report, fournis par les premiers additionneurs (ADᵢ), y compris le premier circuit de correction (1) sont délivrés par l'intermédiaire de premières mémoires intermédiaires (7,9,13..., 8,10...), qu'en aval des premières mémoires intermédiaires est branché au moins un autre groupe d'additionneurs, les additionneurs d'un tel autre groupe possèdant respectivement des entrées pour des bits de somme intermédiaire et de report de même valeur du groupe disposé juste en amont, d'additionneurs, ainsi que des sorties de somme et de report pour la délivrance de bits de somme intermédiaire et de report par l'intermédiaire d'autres mémoires intermédiaires au groupe d'additionneur situé directement en aval ou, dans le cas du dernier groupe, au dispositif additionneur (AS), et qu'en aval des additionneurs de poids maximum de tous les autres groupes, sont branchés d'autres circuits de correction qui correspondent respectivement au premier circuit de correction (1).

4. Dispositif suivant la revendication 2, caractérisé par le fait que soit les premières entrées des premiers additionneurs (ADᵢ) sont raccordés respectivement aux premières mémoires intermédiaires (7,9,14,...), qui sont utilisées pour la délivrance des premiers bits de somme intermédiaire, des mêmes premiers additionneurs, et que les secondes entrées des premiers additionneurs (ADᵢ) sont raccordées respectivement aux premières mémoires intermédiaires (8,10...) qui sont utilisées pour la délivrance de bits de report, de premiers additionneurs possédant le poids immédiatement suivant en second, soit qu'une association, qui diffère de la précédente, est établie entre les premiers additionneurs et les premières mémoires intermédiaires, association dans laquelle les poids des premiers additionneurs chargés à leur entrée par les bits de somme intermédiaire et de report diffèrent respectivement d'un nombre de positions constant par rapport à l'association indiquée, que les mémoires intermédiaires (9,7,14..., 8,10...) sont chargées par des impulsions de cadence possédant une fréquence prédéterminée et que les troisièmes entrées des premiers additionneurs (ADᵢ) sont occupées par une suite de nombres binaires (Di), cette occupation s'effectuant au rythme de la fréquence de cadence.

5. Dispositif suivant la revendication 3, caractérisé par le fait que soit les premières entrées des premiers additionneurs (ADᵢ) sont raccordées aux mémoires intermédiaires (7,9,14...), qui sont utilisées pour la délivrance des bits de somme, d'additionneurs (ADᵢ) possédant le même poids de l'un des autres groupes d'additionneurs (ADᵢ) et les secondes entrées des premiers additionneurs (ADᵢ) sont raccordées respectivement aux mémoires intermédiaires (8,10...), qui sont utilisées pour la délivrance des bits de report, d'additionneurs (ZAᵢ) possédant le poids immédiatement inférieur de cet autre groupe, soit qu'une association, qui diffère de la précédente, est établie entre les premiers additionneurs et les mémoires intermédiaires, association dans laquelle les poids des premiers additionneurs chargés, côté entrée, par les bits de somme intermédiaire et de report, diffèrent par rapport à l'association indiquée, respectivement d'un nombre constant de positions, que les mémoires intermédiaires sont commandées de façon cadencée par des impulsions de cadence possédant une fréquence prédéterminée, que des troisièmes entrées des premiers additionneurs (ADᵢ) ainsi que des troisièmes entrées des additionneurs (ZAᵢ), qui sont contenus dans les autres groupes, sont occupées respectivement par des suites de nombres binaires (Di, Ei), et que cette occupation s'effectue au rythme de la fréquence de cadence.

6. Dispositif suivant l'une des revendications 1 à 5, caractérisé par le fait qu'un additionneur (ADₙ₋₁), en aval duquel est branché un circuit de correction (1), est agencé de telle sorte qu'un premier point (P1) du circuit est raccordé, par l'intermédiaire de trois circuits série respectifs, formés de deux éléments et constitués par des transistors à effet de champ possédant un premier type de canal (T1,T2; T1,T3; T4,T3), à une première borne (15) qui est placée à une tension d'alimentation, que le premier point (P1) du circuit est raccordé par l'intermédiaire de trois circuits série respectifs formés de deux éléments et constitués par des transistors à effet de champ possédant un second type de canal (T6,T7; T6,T8; T9,T10) à une seconde borne (16), est placé au potentiel de référence, qu'un second point (P2) du circuit est raccordé, par l'intermédiaire de trois transistors à effet de champ possédant le premier type de canal (T11,T12,T13), à la première borne (15), qu'un troisième point (P3) du circuit est raccordé par l'intermédiaire de trois transistors à effet de champ possédant un second type de canal (T14,T15,T16) à la seconde borne (16), que le second point (P2) du circuit est raccordé, par l'intermédiaire du circuit série formé de transistors à effet de champ possédant le premier type de canal (T17,T17a), à la sortie inverse de la somme (AGS') du circuit de correction (1), que le troisième point (P3) du circuit est raccordé, par l'intermédiaire du montage série formé de deux transistors à effet de champ possédant le second type de canal (T18,T18a), à cette sortie de somme inverse (AGS'), que les grilles des transistors des circuits série formés de deux éléments peuvent être commandés par l'intermédiaire de trois entrées de l'additionneur, en sorte que des signaux appliqués à respectivement deux des trois entrées placent respectivement l'un de ces circuits série formés de transistors possédant le premier type de canal à l'état conducteur, auquel cas des signaux inverses appliqués aux deux entrées considérées en dernier placent respectivement l'un des trois circuits série formés de deux éléments et constitués de transistors possédant le second type de canal à l'état conducteur, que les grilles des trois transistors à effet de champ possédant le premier type de canal, qui sont situées entre le second point (P2) du circuit et la première borne (15), et les grilles des trois transistors à effet de champ possédant le second type de canal, qui sont disposées entre le troisième point (P3) du circuit et la seconde borne (16), sont raccordées respectivement à une entrée de l'additionneur, que le premier point (P1) du circuit est raccordé à l'entrée de report inverse (AGS) de l'additionneur, que les grilles respectivement de l'un des transistors des circuits série entre le second point (P2) du circuit et la sortie de somme inverse (AGS') ainsi qu'entre le troisième point (P3) du circuit et cette sortie de somme inverse peuvent être commandées par l'intermédiaire du premier point (P1) du circuit, tandis que les grilles des deux autres transistors de ces circuits série peuvent être raccordées à la sortie de report inverse de l'additionneur possédant le poids immédiatement inférieur, que la sortie de somme inverse (AGS') est raccordée par l'intermédiaire d'un circuit série à trois éléments, constitué par les transistors à effet de champ possédant le premier type de canal (T19,T20,T21) à la première borne (15) et par l'intermédiaire d'un circuit série formé de trois éléments et constitué de transistors à effet de champ possédant le second type de canal (T22,T23,T24) à la seconde borne (16), les transistors à effet de champ de chacun de ces circuits série pouvant être commandés chacun par l'intermédiaire d'une entrée de l'additionneur, que la sortie de somme inverse (AGS') est raccordée aussi bien, par l'intermédiaire de deux transistors de commutation possédant le premier type de canal (T27,T28) à une troisième borne (18) qui est placée à la tension d'alimentation, que par l'intermédiaire de deux transistors de commutation possédant le second type de canal (T29,T30), à une quatrième borne (19), qui est placée au potentiel de référence, et que les grilles de l'un des transistors de commutation indiqués en dernier, qui possèdent le premier type de canal, et de l'un des transistors de commutation indiqués en dernier lieu, qui possèdent le second type de canal, (T27,T30) peuvent être commandées par l'intermédiaire de la sortie inverse de report de l'additionneur possédant le poids immédiatement inférieur et les deux autres des transistors de commutation indiqués en dernier lieu peuvent être commandés par l'intermédiaire de la sortie (20) d'un inverseur (T25,T26), dont l'entrée (17) est raccordée au premier point (P1) du circuit.

7. Application d'un dispositif suivant la revendication 2 à un filtre numérique, caractérisée par le fait que les premiers additionneurs (ADᵢ) sont utilisés pour réaliser l'addition de mots de somme intermédiaire et de report, qui sont envoyés par l'intermédiaire d'une boucle récursive (26,28) du filtre numérique, à des valeurs d'amplitudes échantillonnées et numérisées, qui sont délivrées par l'intermédiaire des troisièmes entrées du premier additionneur (ADᵢ), d'un signal d'entrée (Di) du filtre numérique, auquel cas des mémoires intermédiaires utilisées pour la délivrance des premiers bits de somme intermédiaire et de report constituent un étage de retardement (25), et que le dispositif additionneur (AS) est utilisé pour former les valeurs d'amplitude numérisées du signal d'entrée filtré (Di').

8. Application d'un dispositif suivant la revendication 5, comportant un seul autre groupe d'additionneurs, à un filtre numérique, caractérisée par le fait que les premiers additionneurs (ADᵢ) et les additionneurs (ZAᵢ) de l'autre groupe sont utilisés pour réaliser l'addition de mots de somme et de report, qui sont envoyés par l'intermédiaire d'une boucle récursive (28) d'un filtre numérique du second ordre aux deux premières entrées des premiers additionneurs, à des mots de somme et des mots de report d'un premier accumulateur, qui sont envoyés par l'intermédiaire des troisièmes entrées des premiers additionneurs (ADᵢ) et par l'intermédiaire des troisièmes entrées des additionneurs (ZAᵢ) aux troisièmes entrées des additionneurs (ZAᵢ) à l'autre groupe, les mémoires intermédiaires utilisées pour la délivrance des mots de somme intermédiaire et de report des additionneurs (ZAᵢ) de l'autre groupe formant un étage de retardement (27), et que le dispositif additionneur (AS) est utilisé pour former les valeurs d'amplitude numérisées du signal d'entrée filtré (Di').

9. Dispositif suivant l'une des revendications 1 à 8, caractérisé par le fait que le dispositif additionneur (AS) comporte un premier groupe de demi-additionneurs (AS₂', AS₁') dont les premières entrées reçoivent respectivement les bits de somme intermédiaire envoyés côté entrée aux dispositifs additionneurs et dont les secondes entrées reçoivent respectivement les bits de report envoyés côté entrée, que respectivement un bit de somme délivré par un demi-additionneur (AS₂') du premier groupe et un bit de report délivré par le demi-additionneur (AS₁') de poids immédiatement inférieur du premier groupe, sont envoyés aux entrées d'un demi-additionneur (AS₂") d'un second groupe de demi-additionneurs, qu'il est prévu, de façon analogue, d'autres groupes de demi-additionneurs, auxquels sont envoyés des bits de somme intermédiaire et des bits de report, que les bits de report des demi-additionneurs possédant respectivement le poids maximum des différents groupes sont négligés et que les bits de somme, qui sont délivrés par des demi-additionneurs (AS₁', AS₂") et auxquels aucun bit de transfert possédant le poids immédiatement inférieur n'est plus associé, forment respectivement les bits de somme du mot de somme représentant le résultat de l'addition.

10. Dispositif suivant l'une des revendications 1 à 9, caractérisé par le fait que les mémoires intermédiaires sont agencées sous la forme d'étages de registres à décalage et sont réalisés de préférence sous la forme de bascules bistables maître-esclave.
